(19) Europäisches Patentamt
European Patent Office
Office européen des brevets

(11) **EP 3 453 624 B1**

(12) **EUROPÄISCHE PATENTSCHRIFT**

(45) Veröffentlichungstag und Bekanntmachung des Hinweises auf die Patenterteilung:
**23.12.2020 Patentblatt 2020/52**

(21) Anmeldenummer: **18184086.9**

(22) Anmeldetag: **18.07.2018**

(51) Int Cl.:
**B64G 1/10** (2006.01)      **B64G 1/42** (2006.01)
**B64G 1/62** (2006.01)      **G01C 21/24** (2006.01)
**B64G 1/24** (2006.01)

(54) **ZU MULTIPLEN, AGILEN UND AUTONOMEN LANDUNGEN ÜBER EINEM KLEINKÖRPER ODER MOND AUSGEBILDETES ERKUNDUNGSFAHRZEUG**

EXPLORATION VEHICLE DESIGNED FOR MULTIPLE, AGILE AND AUTONOMOUS LANDINGS OVER A SMALL BODY OR LUNAR SURFACE

VÉHICULE D'EXPLORATION CONÇU POUR ATTERRIR À PLUSIEURS REPRISES DE MANIÈRE AGILE ET AUTONOME SUR UN MICRO-CORPS OU SUR LA LUNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.09.2017 DE 102017120911**

(43) Veröffentlichungstag der Anmeldung:
**13.03.2019 Patentblatt 2019/11**

(73) Patentinhaber: **Airbus Defence and Space GmbH 82024 Taufkirchen (DE)**

(72) Erfinder:
• **Johann, Ulrich 88682 Salem (DE)**
• **Falke, Albert 88048 Friedrichshafen (DE)**

• **Ziegler, Tobias 78462 Konstanz (DE)**
• **Delchambre, Simon 78462 Konstanz (DE)**
• **Hey, Franz Georg 88250 Weingarten (DE)**

(74) Vertreter: **Schicker, Silvia Wuesthoff & Wuesthoff Patentanwälte PartG mbB Schweigerstraße 2 81541 München (DE)**

(56) Entgegenhaltungen:
WO-A2-2009/094603      CN-A- 102 981 507
CN-A- 104 494 845      US-A1- 2008 023 587

**Beschreibung**

Die vorliegende Offenbarung betrifft einen Erkundungsfahrzeug zu multiplen, agilen und autonomen Landungen über einem Kleinkörper oder Mond ausgebildetes Erkundungsfahrzeug.

Bisher gibt es noch keine Konzepte für Missionen über Kleinkörpern und Monden mit schwachen Gravitationskräften. Kleinkörper des Sonnensystems sind in diesem Kontext rotierende oder taumelnde Objekte ohne Atmosphäre, deren äußerst schwache gravitative Gegebenheiten ein sicheres, agiles Operieren auf der Oberfläche erschweren oder unmöglich machen, da bereits kleinste Störungen bzw. Störkräfte zum Missionsverlust führen können. Hierzu zählt auch ein unkontrolliertes Abheben von Landefahrzeugen. US 2008/0023587 A1 offenbart ein Landefahrzeug für Planeten, das die erforderliche Navigation in Abhängigkeit von aufgenommenen Bildern der Planetenoberfläche aktualisiert.

Deshalb ist es Aufgabe der vorliegenden Offenbarung ein mobiles, zu multiplen, über die Oberfläche verteilten Landungen fähiges Erkundungsfahrzeug für diese Klasse von Kleinkörpern (Kometen, Asteroiden, NEO's, kleine Monde, Felsbrocken) bereitzustellen.

Gemäß der Erfindung wird ein zu multiplen, agilen und autonomen Landungen über einem Kleinkörper oder Mond ausgebildetes Erkundungsfahrzeug nach Anspruch 1 bereitgestellt. Das Erkundungsfahrzeug umfasst eine Erfassungseinheit, eine Verarbeitungseinheit, eine Steuereinheit und eine Antriebseinheit. Die Erfassungseinheit ist dazu ausgebildet, zumindest eine Umgebung vor dem Erkundungsfahrzeug, in Richtung einer Trajektorie des Erkundungsfahrzeugs über einer Oberfläche des Kleinkörpers oder Mondes, zu erfassen. Die Erfassungseinheit ist dazu ausgebildet, auf der erfassten Umgebung basierte Umgebungsdaten bereitzustellen. Die Verarbeitungseinheit ist dazu ausgebildet, basierend auf den bereitgestellten Umgebungsdaten, die Trajektorie zu aktualisieren. Die Steuereinheit ist dazu ausgebildet, mit der Antriebseinheit zusammenzuwirken, um das Erkundungsfahrzeug entsprechend der aktualisierten Trajektorie zu bewegen.

Der Begriff "bewegen" kann auch als "fliegen" verstanden werden oder als "kontrolliertes Bewegen".

Die Verarbeitungseinheit kann ferner dazu ausgebildet sein, unter Berücksichtigung von Corioliskräften, die Trajektorie zu aktualisieren.

Das Erkundungsfahrzeug kann zur agilen und autonomen Operation ausgebildet sein. Ferner kann das Erkundungsfahrzeug ein levitierender und zu multipler Landung ausgebildeter Prospektor für Kleinkörper im Sonnensystem sein.

Das Erkundungsfahrzeug kann auch ein Lander sein oder als solcher bezeichnet sein.

Das Erkundungsfahrzeug findet bevorzugt Anwendung in der Erforschung und Entdeckung des Sonnensystems, seiner Entdeckung und seiner Entwicklung. Zudem ist es Aufgabe mittels des Erkundungsfahrzeugs weitere Aufschlüsse über den Ursprung des Lebens zu erhalten und die Aktivität des Kleinkörpers, insbesondere eines Kometen, zu erforschen. Durch eine direkte Untersuchung auf der Oberfläche des Kleinkörpers und die Fähigkeit, sich entlang der Oberfläche des Kleinkörpers bewegen zu können, können bessere wissenschaftliche Rückschlüsse gezogen werden. Außerdem ermöglicht das Erkundungsfahrzeug durch eine Kombination aus "Naherkundung" in einer Levitationsphase und in-situ Erkundung ausgesuchter, über die Oberfläche verteilter Landepositionen, Rückschlüsse über eine Zusammensetzung und Verteilung von Materialien zu ziehen. Hierdurch kann das Erkundungsfahrzeug insbesondere für kommerzielle Anwendungen als Prospektor von Bodenschätzen auf Kleinkörpern und Monden im Sonnensystem eingesetzt werden.

Der Kleinkörper kann ein Asteroid oder Komet sein. Das Erkundungsfahrzeug kann eine landefähige Raumsonde sein. Das Erkundungsfahrzeug kann ein harter oder weicher Lander sein. Die Trajektorie kann zumindest teilweise einen Abstand zwischen dem Erkundungsfahrzeug und der Oberfläche des Kleinkörpers oder Mondes aufweisen. Die Antriebseinheit kann beispielsweise eine nicht auf Haftreibung basierende Antriebseinheit sein. Das Erkundungsfahrzeug kann sich beispielweise ohne Hilfe einer Haftreibung fortbewegen.

Der Ausdruck "über einer Oberfläche" kann hier als "oberhalb einer Oberfläche" verstanden werden, damit klar ist, dass sich die Trajektorie nicht direkt auf der Oberfläche befindet und dass sich das Erkundungsfahrzeug nicht auf der Oberfläche fortbewegt.

Der Ausdruck "fliegen" kann hier ein "Schwebeflug" oder ein "schwebendes Fortbewegen" umfassen. Ferner kann das Fliegen einen Parabelflug, zum Beispiel antriebslos, zwischen Landepositionen umfassen. Zum Beispiel umfasst der Parabelflug eine Orbitaltrajektorie.

Die Antriebseinheit kann ferner dazu ausgebildet sein, in Vakuum betrieben zu werden.

Die aktualisierte Trajektorie kann ein Polygonzug sein. Das Erkundungsfahrzeug kann dazu ausgebildet sein, an einem Punkt des Polygonzugs eine Drehung in einer horizontalen Ebene des Erkundungsfahrzeugs durchzuführen, um sich entsprechend der auf den Punkt folgenden Polygonstrecke auszurichten. Das Erkundungsfahrzeug kann dazu ausgebildet sein, an dem Punkt des Polygonzugs eine Drehung in der horizontalen Ebene des Erkundungsfahrzeugs durchzuführen, um nach der Drehung entlang der auf den Punkt folgenden Polygonstrecke zu bewegen.

Die Antriebseinheit ist dazu ausgebildet, Kräfte aufzubringen, die in einem Bereich zwischen 1N und $10^{-6}$ N, zum Beispiel auch $10^{-4}$ N und $10^{-6}$ N, liegen, um das Erkundungsfahrzeug in einem Schwebezustand über der Oberfläche zu halten. Das Halten liegt in einem Zeitraum von 1 Minute bis zu 1 Stunde. Das Halten kann an Stellen durchgeführt werden, an denen ein Schwerkraftvektor von einer lokalen Oberflächennormalen abweicht, z.B. an einer Steilwand oder Loch des Kleinkörpers oder Mondes.

Die Antriebseinheit kann ferner dazu ausgebildet sein, eine Geschwindigkeit des Erkundungsfahrzeugs relativ zu dem Kleinkörper oder Mond einzustellen, um das Erkundungsfahrzeug entlang der aktualisierten Trajektorie zu bewegen. Ein Solardruck einer Sonne, lokale Corioliskräfte und/oder unerwartete Schwerkraftanomalien kann/können beim Einstellen der Geschwindigkeit berücksichtigt werden.

Die Erfassungseinheit kann ferner dazu ausgebildet sein, einen relativen Abstand einer aktuellen Position des Erkundungsfahrzeugs zu der Oberfläche des Kleinkörpers oder Mondes zu erfassen. Die Erfassungseinheit kann ferner dazu ausgebildet sein, den relativen Abstand der Verarbeitungseinheit bereitzustellen. Die Erfassungseinheit kann ferner dazu ausgebildet sein, laterale Relativbewegungen des Erkundungsfahrzeugs zur lokalen Oberfläche des Kleinkörpers oder Mondes zu erfassen und der Verarbeitungseinheit bereitzustellen. Die Verarbeitungseinheit kann dazu ausgebildet sein, der Steuereinheit eine Sollgeschwindigkeit entsprechend dem relativen Abstand und/oder der lateralen Relativbewegung bereitzustellen. Die Steuereinheit kann dazu ausgebildet sein, mit der Antriebseinheit zusammenzuwirken, um das Erkundungsfahrzeug entsprechend der aktualisierten Trajektorie zu bewegen.

Das Erkundungsfahrzeug kann ferner einen Beschleunigungssensor umfassen. Der Beschleunigungssensor kann dazu ausgebildet sein, eine Beschleunigung des Erkundungsfahrzeugs zu messen. Die Verarbeitungseinheit kann dazu ausgebildet sein, basierend auf der gemessenen Beschleunigung, der Steuereinheit eine zur Verfolgung der aktualisierten Trajektorie notwendige Geschwindigkeit bereitzustellen.

Ferner kann die Verarbeitungseinheit dazu ausgebildet sein, basierend auf einem Gravitationsmodul des Kleinkörpers oder Mondes, beim Aktualisieren der Trajektorie eine nicht zu unterschreitende Minimalgeschwindigkeit des Erkundungsfahrzeugs relativ zu dem Kleinkörper oder Mond zu berücksichtigen.

Die Verarbeitungseinheit kann ferner dazu ausgebildet sein, beim Aktualisieren der Trajektorie zu berücksichtigen, dass entlang der Trajektorie nur Drehmomente kleiner als $10^{-2}$ Nm in einer einem Schwerpunkt des Kleinkörpers oder Mondes zu- oder abgewandten Richtung auftreten.

Das Erkundungsfahrzeug kann ein Energieversorgungssystem umfassen. Das Energieversorgungssystem kann einen Energiespeicher umfassen. Das Energieversorgungssystem kann einen Energieversorger umfassen. Das Energieversorgungssystem kann dazu ausgebildet sein, die Antriebseinheit mit Energie zu versorgen.

Der Energieversorger kann dazu ausgebildet sein, den Energiespeicher und die Antriebseinheit mit Energie zu versorgen, wenn Sonnenstrahlung von einer Sonne vorhanden ist.

Der Energiespeicher kann dazu ausgebildet sein, die Antriebseinheit mit Energie zu versorgen, falls keine Sonnenstrahlung von einer Sonne vorhanden ist.

Der Energiespeicher kann dazu ausgebildet sein, zusammen mit dem Energieversorger, die Antriebseinheit mit Energie zu versorgen, wenn eine von dem Energieversorger gelieferte Versorgungsspannung einen Schwellenwert unterschreitet. Der Schwellenwert kann eine minimale Versorgungsspannung der Antriebseinheit kennzeichnen.

Die Verarbeitungseinheit kann dazu ausgebildet sein, beim Aktualisieren der Trajektorie zu berücksichtigen, dass sich eine Landeposition für das Erkundungsfahrzeug am Ende der aktualisierten Trajektorie auf einer Oberfläche des Kleinkörpers oder Mondes in Sichtverbindung zu einer Sonne befindet, um den Energieversorger durch Strahlung der Sonne mit Energie zu versorgen. Die Verarbeitungseinheit kann ferner dazu ausgebildet sein, beim Aktualisieren der Trajektorie zu berücksichtigen, dass sich eine Landeposition für das Erkundungsfahrzeug unterhalb der aktualisierten Trajektorie auf einer Oberfläche des Kleinkörpers oder Mondes in Sichtverbindung zu einer Sonne befindet, um den Energieversorger durch Strahlung der Sonne mit Energie zu versorgen.

Der Energieversorger kann dazu ausgebildet sein, den Energiespeicher mit Energie zu versorgen. Der Energiespeicher kann dazu ausgebildet sein, mit Energie von dem Energieversorger versorgt zu werden.

Das Energieversorgungssystem weist beispielhaft nur unidirektionale elektrische Verbindungen auf.

Ein Schweben des Erkundungsfahrzeugs kann durch Einstellen einer Abstoßkraft basierend auf einem Beschleunigungsvektor, Beschleunigungsmodul und/oder Gravitationskraftmodul des Kleinkörpers beruhen.

Das Schweben kann ferner über eine Schwebebedingung eingestellt werden. Die Schwebebedingung kann eine minimale Geschwindigkeit und eine maximale Geschwindigkeit entlang der Trajektorie aufweisen. Die minimale Geschwindigkeit und die maximale Geschwindigkeit können einen Bereich definieren, in dem das Erkundungsfahrzeug nicht von dem Kleinkörper abgestoßen wird oder flüchtet.

Das Schweben, sowie Abheben und Aufsetzen kann in unmittelbarer Bodennähe durch geeigneten Betrieb der Antriebseinheit unterstützt werden, zum Beispiel von elektrischen Triebwerken oder induzierten elektrostatischen Kräften zwischen der Oberfläche des Kleinkörpers oder Mondes und dem Erkundungsfahrzeug.

Weitere Ziele, Merkmale, Vorteile und Anwendungsmöglichkeiten ergeben sich aus der nachfolgenden Beschreibung von nicht einschränkend zu verstehenden Ausführungsbeispielen mit Bezug auf die zugehörigen schematischen Zeichnungen.

Figur 1    zeigt schematisch eine Anwendung der vorliegenden Offenbarung;

Figur 2    zeigt schematisch ein Energieversorgungssystem eines Erkundungsfahrzeugs;

Figur 3    zeigt schematisch ein Manöver eines Landes auf einem Kleinkörper; und

Figur 4    zeigt schematisch einen Tag- und Nachtzyklus einer Operation eines Erkundungsfahrzeugs.

In den Figuren sind einander entsprechende oder funktionsähnliche Bauteile mit gleichen Bezugszeichen versehen. Der erfindungsgemäße Erkundungsfahrzeug wird nun anhand von Ausführungsbeispielen beschrieben.

Für gewöhnlich liegen bei Kleinkörpern, wie Kometen und Asteroiden, die Gravitationskräfte in Bezug auf eine Beschleunigung im Bereich von $10^{-6}$ und $10^{-4}$ m/s$^2$. Dadurch sind mit Rollen versehene Landefahrzeuge zur Landung auf Kleinkörpern nicht geeignet. Dies gilt sowohl für harte als auch für weiche Erkundungsfahrzeug.

Daher sieht die vorliegende Offenbarung einen Erkundungsfahrzeug vor, der in niedriger Höhe über dem Kleinkörper schweben soll, um ein besseres Verständnis von der Form, der Größe, der Dichte und der Spinrate des Kleinkörpers zu erlangen. Das Erkundungsfahrzeug umfasst ein aktives GNC System für autonome Schwebemanöver unter Anwendung eines Kollisionsvermeidungsalgorithmus.

Für Lande- und Flugmanöver sind gemäß der vorliegenden Offenbarung zwei verschiedene Missionsarchitekturen möglich, nämlich ein einzelnes Erkundungsfahrzeug ohne Orbiter (1. Option) oder ein Erkundungsfahrzeug mit Orbiter (2.Option). Der für das Erkundungsfahrzeug notwendige Antriebsstrang zur Fortbewegung und zum Transfer des Erkundungsfahrzeugs kann einen chemischen und/oder elektrischen Antrieb umfassen. Der zum Schweben verwendete Antrieb kann bei beiden Optionen ein elektrischer Antrieb, ein Kaltgasantrieb, ein Antrieb aus Hybrid-Brennstoff, ein elektro-statischer Antrieb oder eine Kombination aus einzelnen dieser Antriebe sein.

Zur Kommunikation mit einer erdnahen oder auf der Erde befindlichen Basisstation wird bei der 1.Option ein direkter Link zwischen Erde und Erkundungsfahrzeug benötigt. Für die 2.Option kann ein direkter Link zwischen Erde und Erkundungsfahrzeug bestehen. Für die 2.Option kann aber auch der Orbiter, z.B. als Repeater, verwendet werden, um das von der Erde stammende Signal an das Erkundungsfahrzeug weiterzuleiten oder das von dem Erkundungsfahrzeug stammende Signal an die Basisstation weiterzuleiten. Ein für das Erkundungsfahrzeug benötigtes Stromversorgungssystem kann für die 1.Option aus einer Kombination von abnehmbaren und/oder einsetzbaren Solarpanelen und Batterien bestehen. Für die 2.Option, kann das Stromversorgungssystem für das Erkundungsfahrzeug aus einer Kombination aus Batterien und entweder abnehmbaren und einsetzbaren Solarpanelen oder an dem Erkundungsfahrzeug angebrachten Solarpanelen bestehen.

Bezüglich der 2.Option kann der Orbiter dazu vorgesehen sein, das Erkundungsfahrzeug in die Nähe des Kleinkörpers mitzuführen und Ihn über dem Kleinkörper abzulassen. Hierdurch kann das Erkundungsfahrzeug in einer leichteren Bauweise hergestellt werden und Energie zur Versorgung des Antriebs eingespart werden.

Anhand eines Beschleunigungsvektors, eines Beschleunigungsmoduls und/oder eines Gravitationskraftmoduls des Kleinkörpers kann eine Abstoßkraft eingestellt werden, die der effektiven Gravitationskraft entspricht. Hierdurch kann das Erkundungsfahrzeug den Zustand des Schwebens erreichen. Ein effektiver Gravitationsvektor ergibt sich hierbei durch

$$\vec{g}_{eff} = \vec{g} - \vec{\omega} \times [\vec{\omega} \times \vec{r}]$$

(Gleichung 1)

Wobei geff der effektive Gravitationsvektor ist, g der Gravitationsvektor des Kleinkörpers ist, $\omega$ die Winkelgeschwindigkeit des Kleinkörpers ist und r der Richtungsvektor zu einem Punkt an der Oberfläche ist.

Ferner kann eine Schwebebedingung aufgestellt werden, die durch einen Bereich gekennzeichnet sein kann, dessen Grenzen den Bereich kennzeichnen, in dem keine Flucht des Erkundungsfahrzeugs von dem Kleinkörper auftritt. Die Schwebebedingung kann über eine Fluchtbedingung gegeben sein:

$$v_I \geq \sqrt{U(r)}$$

(Gleichung 2)

Ferner kann die Schwebedingung gegeben sein durch:

$$M = \left(1 - \frac{v_I}{\sqrt{U(r)}}\right)$$

(Gleichung 3)

wobei

$$\vec{v}_I = \vec{v}_{rel} + \vec{\omega} \times \vec{r}$$

(Gleichung 4)

Damit kann die Schwebebedingung bei der Annahme einer relativen Geschwindigkeit von maximal 0,15 m/s zwischen 0,35 und 0,85 liegen.

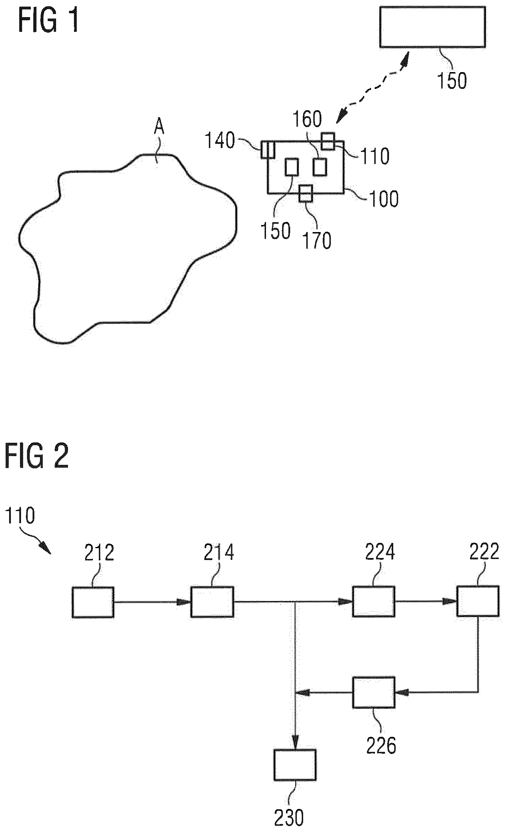

In Figur 1 ist sowohl die 1.Option, als auch die 2.Option dargestellt. Im Sinne der 1.Option ist ein Erkundungsfahrzeug 100 mit einem Energieversorgungssystem 110 dargestellt. Zur Kommunikation kann ein Sende- und Empfangsgerät mit zusätzlicher Verarbeitungseinheit vorgesehen sein (nicht gezeigt). Die in Figur 1 ebenfalls veranschaulichte 2.Option sieht vor, dass die Kommunikation über einen Orbiter 150 stattfindet. Hierbei kann der Orbiter 150 mit einem leistungsstärkeren Repeater versehen sein, um robuste Kommunikation zu gewährleisten. Der Orbiter 150 kann zusätzlich eine stabile Kommunikation gewährleisten, falls sich das Erkundungsfahrzeug 100 auf einer erdabgewandten Seite eines Kleinkörpers A befindet. Der Kleinkörper A ist hierbei ein Komet oder Asteroid. Gemäß beiden Optionen umfasst das Erkundungsfahrzeug 100 in Figur 1 eine Erfassungseinheit 140, eine Verarbeitungseinheit 150, eine Steuereinheit 160 und eine Antriebseinheit 170.

Die Erfassungseinheit 140 ist dazu ausgebildet, zumindest eine Umgebung vor dem Erkundungsfahrzeug, in Richtung einer Trajektorie des Erkundungsfahrzeugs 100 über einer Oberfläche des Kleinkörpers oder Mondes (A), zu erfassen. Die Erfassungseinheit 140 ist dazu ausgebildet, auf der erfassten Umgebung basierte Umgebungsdaten bereitzustellen. Die Verarbeitungseinheit 150 ist dazu ausgebildet, basierend auf den bereitgestellten Umgebungsdaten, die Trajektorie zu aktualisieren. Die Steuereinheit 160 wirkt mit der Antriebseinheit 170 zusammen, um das Erkundungsfahrzeug entsprechend der aktualisierten Trajektorie zu bewegen. Die Steuereinheit 160 und die Verarbeitungseinheit 150 können hierbei als eine Einheit oder als separate Einheiten ausgeführt sein. Die Steuereinheit 160 kann auch in die Antriebseinheit 170 integriert sein. Ferner können die einzelnen Einheiten untereinander in Verbindung stehen. Zum Beispiel kann die Erfassungseinheit 140 mit der Verarbeitungseinheit 150 elektrisch verbunden sein. Zum Beispiel kann die Verarbeitungseinheit 150 mit der Steuereinheit 160 elektrisch verbunden sein. Zum Beispiel kann die Steuereinheit 160 mit der Antriebseinheit elektrisch verbunden sein.

Gemäß beiden Optionen zeigt Figur 2 eine Detaildarstellung eines Energieversorgungssystems 110 des Erkundungsfahrzeugs 100. Das Energieversorgungssystem 110 ist für die Stromversorgung des Erkundungsfahrzeugs 100 notwendig und stellt eine Randbedingung beim Design des Erkundungsfahrzeugs 100 dar.

Das Energieversorgungssystem 110 umfasst ein Solarpanel 212 (Energieversorger), einen Leistungsregler 214 für das Solarpanel 212, eine Batterie 222 (Energiespeicher), einen Batterieladeregler 224, einen Batterieentladeregler 226 und Last(en) 230.

Das Solarpanel 212 kann aus einer Gruppe von Solarpanelen 212 bestehen. Der Leistungsregler 214 für das Solarpanel 212 kann ein Längsregler 214 sein, der die Spannung auf einer durch das Solarpanel 214 bereitgestellten Spannung aufrecht hält. Die Batterie 222 kann eine kompakte Batterieanordnung 222 beispielsweise aus Blei- oder Lithium- Batterien umfassen. Der Batterieladeregler 224 ist dazu vorgesehen, die Batterie mit Energie zu versorgen, die von dem Solarpanel 212 über den Leistungsregler 214 für das Solarpanel 212 an die Batterie bereitgestellt werden soll. Der Batterieentladeregler 226 ist dabei vorgesehen, den Entladevorgang der Batterie 222 zu überwachen und/oder so zu regeln, dass die Batterie die notwendige Versorgungsspannung liefert. Dies kann auch dann der Fall sein, wenn keine Sonnenstrahlung vorhanden ist und das Solarpanel 212 keinen Strom liefert. Zum Beispiel kann die komplette Stromversorgung von dem Solarpanel 212 übernommen werden, wenn Sonnenstrahlung auf das Solarpanel 212 trifft. Die Last 230 kann eine Steuerung, ein Prozessor und/oder ein Antrieb sein, für die/den Strom benötigt wird. Ferner wird die Energie der Solarpanel(e) 212 dazu verwendet, die Batterie 222 über den Batterieladeregler 224 zu laden. Dazu muss gewährleistet werden, dass die Leistung nicht einbricht. Dies geschieht über den Leistungsregler 214.

Gemäß den Figuren 1 und 2 ist das Erkundungsfahrzeug 100 zusätzlich mit Aktuatoren und Sensoren versehen. Die Aktuatoren sind die zur Fortbewegung notwendigen Schubdüsen. Die Sensoren zur Verhinderung von Kollisionen und zur Landung sind Stereokameras und Panoramakameras, sowie MEMS Sensoren und Lidar bzw. Höhenmesser.

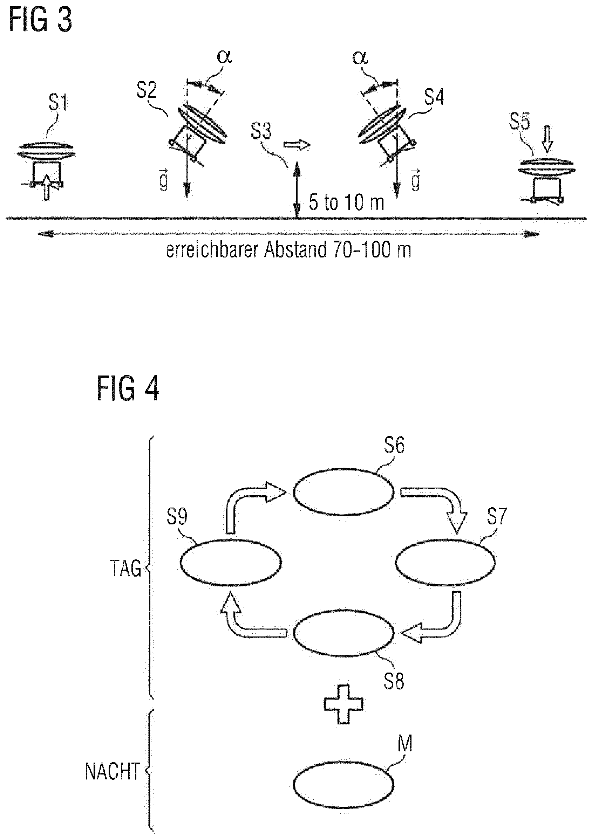

In Figur 3 ist ein Manöver dargestellt, welches entlang einer Trajektorie einer Oberfläche des Kleinkörpers von dem Erkundungsfahrzeug durchgeführt wird. Hierbei ist ein beispielhaftes Manöver dargestellt, welches die Schritte S1 bis S5 umfasst: Abheben S1, Beschleunigen S2, Schweben S3, Abbremsen S4 und Landen S5. Ein Landen kann durch entsprechende Landefüße unter dem Erkundungsfahrzeug sichergestellt werden. Dies kann zum Beispiel ein einfaches Dreibein sein.

Da das Manöver nicht unendlich lange durchgeführt werden kann, werden bestimmte Zyklen angewendet, wie in Figur 4 zu sehen. Hierbei werden bei Tag, das heißt, bei vorhandener Sonneneinstrahlung, die Schritte Analyse S6, Batterieladen S7, Schweben S8 und erneutes Batterieladen S9 sequenziell durchgeführt. Bei Nacht, das heißt, falls keine Sonnenstrahlung vorhanden ist, geht das Erkundungsfahrzeug, bzw. die dazu vorgesehenen Vorrichtungen in eine Idle Mode M, um Strom zu sparen.

Damit das Erkundungsfahrzeug externen Störungen wirksam entgegenwirken kann, besitzt er eine Bewegungs- und Orientierungssteuerung. Hierzu sind die dazu notwendigen Triebwerke (Antriebseinheit/Antriebe) so angeordnet und ausgebildet, Translationsbewegungen und Rotationsbewegungen auszugleichen. Hierbei ist entscheidend, dass die von dem Kleinkörper weg gerichteten Kräfte, die durch die Triebwerke erzeugt werden, größer sind als die effektive Gravitationskraft, die der Kleinkörper auf das Erkundungsfahrzeug ausübt.

**Patentansprüche**

1. Zu multiplen, agilen und autonomen Landungen auf einem Kleinkörper (A) oder Mond mit schwachen Gravitationskräften in Bezug auf eine Beschleunigung im Bereich von $10^{-6}$ bis $10^{-4}$ m/s$^2$ ausgebildetes Erkundungsfahrzeug (100) umfassend:

   eine Erfassungseinheit (140), die dazu ausgebildet ist, zumindest eine Umgebung vor dem Erkundungsfahrzeug (100), in Richtung einer Trajektorie des Erkundungsfahrzeugs (100) über einer Oberfläche des Kleinkörpers (A) oder Mondes, zu erfassen und auf der erfassten Umgebung basierte Umgebungsdaten bereitzustellen;
   eine Verarbeitungseinheit (150), die dazu ausgebildet ist, basierend auf den bereitgestellten Umgebungsdaten, die Trajektorie zu aktualisieren und, basierend auf einem Betrag eines Gravitationskraftvektors des Kleinkörpers (A) oder Mondes, beim Aktualisieren der Trajektorie eine nicht zu überschreitende Maximalgeschwindigkeit des Erkundungsfahrzeugs (100) relativ zu dem Kleinkörper (A) oder Mond zu berücksichtigen;
   eine Steuereinheit (160) und eine Antriebseinheit (170), die dazu ausgebildet sind, zusammenzuwirken, um das Erkundungsfahrzeug (100) entsprechend der aktualisierten Trajektorie zu bewegen, wobei die Antriebseinheit (170) dazu ausgebildet ist, Kräfte aufzubringen, die in einem Bereich zwischen 1 N und $10^{-6}$ N liegen, um das Erkundungsfahrzeug (100) für einen Zeitraum zwischen 1 Minute bis zu 1 Stunde in einem Schwebezustand über der Oberfläche zu halten.

2. Erkundungsfahrzeug nach Anspruch 1, wobei die Antriebseinheit (170) ferner dazu ausgebildet ist, im Vakuum betrieben zu werden.

3. Erkundungsfahrzeug nach Anspruch 1 oder 2, wobei die aktualisierte Trajektorie ein Polygonzug ist und das Erkundungsfahrzeug (100) dazu ausgebildet ist, an einem Punkt des Polygonzugs eine Drehung in einer horizontalen Ebene des Erkundungsfahrzeugs (100) durchzuführen, um sich entsprechend der auf den Punkt folgenden Polygonstrecke auszurichten und nach der Drehung entlang der auf den Punkt folgenden Polygonstrecke zu bewegen.

4. Erkundungsfahrzeug nach einem der Ansprüche 1 bis 3, wobei die Antriebseinheit (170) ferner dazu ausgebildet ist, eine Geschwindigkeit des Erkundungsfahrzeugs (100) relativ zu dem Kleinkörper (A) oder Mond einzustellen, um das Erkundungsfahrzeug (100) entlang der aktualisierten Trajektorie zu bewegen, wobei ein Solardruck einer Sonne beim Einstellen der Geschwindigkeit berücksichtigt wird.

5. Erkundungsfahrzeug nach einem der Ansprüche 1 bis 4, wobei die Erfassungseinheit (140) ferner dazu ausgebildet ist, einen relativen Abstand einer aktuellen Position des Erkundungsfahrzeugs (100) zu der Oberfläche des Kleinkörpers (A) oder Mondes zu erfassen und der Verarbeitungseinheit (150) bereitzustellen, die ihrerseits dazu ausgebildet ist, der Steuereinheit (160) eine Sollgeschwindigkeit entsprechend dem relativen Abstand bereitzustellen, wobei die Steuereinheit (160) dazu ausgebildet ist, mit der Antriebseinheit (170) zusammenzuwirken, um das Erkundungsfahrzeug (100) entsprechend der aktualisierten Trajektorie zu bewegen.

6. Erkundungsfahrzeug nach einem der Ansprüche 1 bis 5, ferner umfassend einen Beschleunigungssensor, der dazu ausgebildet ist, eine Beschleunigung des Erkundungsfahrzeugs (100) zu messen, wobei die Verarbeitungseinheit (150) dazu ausgebildet ist, basierend auf der gemessenen Beschleunigung, der Steuereinheit (160) eine zur Verfolgung der aktualisierten Trajektorie notwendige Geschwindigkeit bereitzustellen.

7. Erkundungsfahrzeug nach einem der Ansprüche 1 bis 6, wobei die Verarbeitungseinheit (150) ferner dazu ausgebildet ist, basierend auf dem Betrag des Gravitationskraftvektors, beim Aktualisieren der Trajektorie eine nicht zu unterschreitende Minimalgeschwindigkeit des Erkundungsfahrzeugs relativ zu dem Kleinkörper (A) oder Mond zu berücksichtigen.

8. Erkundungsfahrzeug nach einem der Ansprüche 1 bis 7, wobei die Verarbeitungseinheit (150) dazu ausgebildet ist, beim Aktualisieren der Trajektorie zu berücksichtigen, dass entlang der Trajektorie nur Drehmomente kleiner als $10^{-2}$ Nm in einer einem Schwerpunkt des Kleinkörpers (A) oder Mondes zu- oder abgewandten Richtung auftreten.

9. Erkundungsfahrzeug nach einem der Ansprüche 1 bis 8, wobei das Erkundungsfahrzeug (100) ein Energieversorgungssystem (110) umfasst, und wobei das Energieversorgungssystem (110) einen Energiespeicher (222) und einen Energieversorger (212) aufweist, wobei das Energieversorgungssystem (110) dazu ausgebildet ist, die Antriebseinheit (170) mit Energie zu versorgen.

10. Erkundungsfahrzeug nach Anspruch 9, wobei der Energieversorger (212) dazu ausgebildet ist, den Energiespeicher (222) und die Antriebseinheit (170) mit Energie zu versorgen, wenn Sonnenstrahlung von einer Sonne vorhanden ist.

11. Erkundungsfahrzeug nach Anspruch 9 oder 10, wobei der Energiespeicher (222) dazu ausgebildet ist, die Antriebseinheit (170) mit Energie zu versorgen, falls keine Sonnenstrahlung von einer Sonne vorhanden ist.

12. Erkundungsfahrzeug nach einem der Ansprüche 9 bis 11, wobei der Energiespeicher (222) dazu ausgebildet ist, zusammen mit dem Energieversorger (212), die Antriebseinheit (170) mit Energie zu versorgen, wenn eine von dem Energieversorger (212) gelieferte Versorgungsspannung einen Schwellenwert unterschreitet, wobei der Schwellenwert eine minimale Versorgungsspannung der Antriebseinheit (170) kennzeichnet.

13. Erkundungsfahrzeug nach einem der Ansprüche 9 bis 12, wobei die Verarbeitungseinheit (150) dazu ausgebildet ist, beim Aktualisieren der Trajektorie zu berücksichtigen, dass sich eine Landeposition für das Erkundungsfahrzeug (100) am Ende der aktualisierten Trajektorie oder eine Landeposition für das Erkundungsfahrzeug (100) unterhalb der aktualisierten Trajektorie auf einer Oberfläche des Kleinkörpers (A) oder Mondes in Sichtverbindung zu einer Sonne befindet, um den Energieversorger (212) durch Strahlung der Sonne mit Energie zu versorgen.

14. Erkundungsfahrzeug nach einem der Ansprüche 9 bis 13, wobei der Energieversorger (212) dazu ausgebildet ist, den Energiespeicher (222) mit Energie zu versorgen und/oder der Energiespeicher (222) dazu ausgebildet ist, mit Energie von dem Energieversorger (212) versorgt zu werden.

15. Erkundungsfahrzeug einem der Ansprüche 9 bis 14, wobei das Energieversorgungssystem (110) nur unidirektionale elektrische Verbindungen aufweist.

**Claims**

1. A reconnaissance rover (100) designed for multiple agile and autonomous landings on a small body or moon having weak gravitational forces in relation to an acceleration in the range of $10^{-6}$ to $10^{-4}$ m/s$^2$, the reconnaissance rover (100) comprising:

   a detection unit (140), which is designed to detect at least an environment in front of the reconnaissance rover (100), in the direction of a trajectory of the reconnaissance rover (100) over a surface of the small body (A) or moon and to provide environmental data based on the detected environment;
   a processing unit (150), which is designed to update the trajectory based upon the provided environmental data and, based on an amount of a gravitational force vector of the small body (A) or moon, when updating the trajectory to take into account a maximum velocity of the reconnaissance rover (100) relative to the small body (A) or moon, which the reconnaissance rover (100) must not exceed;
   a control unit (160) and a drive unit (170), which are designed to interact in order to move the reconnaissance rover (100) according to the updated trajectory, wherein the drive unit (170) is designed to apply forces which are in a range between 1 N and $10^{-6}$ N, in order to hold the reconnaissance rover (100) in a hovering state above the surface for a period from 1 minute to 1 hour.

2. The reconnaissance rover according to claim 1, wherein the drive unit (170) is further designed to be operated in a vacuum.

3. The reconnaissance rover according to claim 1 or 2, wherein the updated trajectory is a polygonal chain and the reconnaissance rover (100) is designed to perform a rotation in a horizontal plane of the reconnaissance rover (100) at one point in the polygonal chain, in order to align itself according to the polygonal path following the point and to move along the polygonal path following the point after the rotation.

4. The reconnaissance rover according to any one of claims 1 to 3, wherein the drive unit (170) is further designed to adjust a speed of the reconnaissance rover (100) relative to the small body (A) or moon, to move the reconnaissance rover (100) along the updated trajectory, a solar pressure of a sun being taken into account when adjusting the speed.

5. The reconnaissance rover according to any one of claims 1 to 4, wherein the detection unit (140) is further designed to detect a relative distance of a current position of the reconnaissance rover (100) with respect to the surface of the small body (A) or moon and to provide said distance to the processing unit (150), which in turn is designed to provide the control unit (160) with a target speed corresponding to the relative distance, the control unit (160) being designed to interact with the drive unit (170) to move the reconnaissance rover (100) according to the updated trajectory.

6. The reconnaissance rover according to any one of claims 1 to 5, further comprising an acceleration sensor which is designed to measure an acceleration of the reconnaissance rover (100), the processing unit (150) being designed to provide the control unit (160) with a speed necessary for tracking the updated trajectory based on the measured acceleration.

7. The reconnaissance rover according to any one of claims 1 to 6, wherein the processing unit (150) is further designed, based on the amount of the gravitational force vector, when updating the trajectory to take into account a minimum velocity of the reconnaissance rover (100) relative to the small body (A) or moon, which the reconnaissance rover (100) must not fall below.

8. The reconnaissance rover according to any one of claims 1 to 7, wherein the processing unit (150) is designed, when updating the trajectory, to take into account that along the trajectory only torque values of less than $10^{-2}$ Nm occur in a direction facing towards or away from a center of gravity of the small body (A) or moon.

9. The reconnaissance rover according to any one of claims 1 to 8, the reconnaissance rover (100) comprising an energy supply system (110), and wherein the energy supply system (110) has an energy storage device (222) and an energy supply device (212), the energy supply system (110) being designed to supply the drive unit (170) with energy.

10. The reconnaissance rover according to claim 9, wherein the energy supply device (212) is designed to supply the energy storage device (222) and the drive unit (170) with energy when solar radiation from a sun is present.

11. The reconnaissance rover according to claim 9 or 10, wherein the energy storage device (222) is designed to supply the drive unit (170) with energy in case no solar radiation from a sun is present.

12. The reconnaissance rover according to any one of claims 9 to 11, wherein the energy storage device (222), together with the energy supply device (212), is designed to supply the drive unit (170) with energy when a supply voltage delivered by the energy supply device (212) falls below a threshold value, the threshold value being a minimum supply voltage of the drive unit (170).

13. The reconnaissance rover according to any one of claims 9 to 12, wherein the processing unit (150) is designed, when updating the trajectory, to take into account the fact that a landing position for the reconnaissance rover (100) at the end of the updated trajectory or a landing position for the reconnaissance rover (100) below the updated trajectory on a surface of the small body (A) or moon has a line-of-sight connection to a sun, in order to supply the energy supply device (212) with energy by radiation from the sun.

14. The reconnaissance rover according to any one of claims 9 to 13, wherein the energy supply device (212) is designed to supply the energy storage device (222) with energy and/or the energy storage device (222) is designed to be supplied with energy from the energy supply device (212).

**15.** The reconnaissance rover as according to any one of claims 9 to 14, wherein the energy supply system (110) has only unidirectional electrical connections.

## Revendications

**1.** Véhicule d'exploration (100) conçu pour des atterrissages multiples, agiles et autonomes sur un petit corps (A) ou la lune ayant de faibles forces gravitationnelles en relation avec une accélération dans la plage de $10^{-6}$ à $10^{-4}$ m/s$^2$, comprenant :

une unité de détection (140) qui est conçue pour détecter au moins un environnement devant le véhicule d'exploration (100), dans la direction d'une trajectoire du véhicule d'exploration (100) sur une surface du petit corps (A) ou de la lune, et pour fournir des données d'environnement basées sur l'environnement détecté ;
une unité de traitement (150) qui est conçue pour mettre à jour la trajectoire sur la base des données d'environnement fournies et, sur la base d'une norme d'un vecteur de force gravitationnelle du petit corps (A) ou de la lune, pour tenir compte, lors de la mise à jour de la trajectoire, d'une vitesse maximale du véhicule d'exploration (100) par rapport au petit corps (A) ou à la lune qu'il ne faut pas dépasser ;
une unité de commande (160) et une unité de propulsion (170) qui sont conçues pour coopérer afin de déplacer le véhicule d'exploration (100) selon la trajectoire mise à jour, l'unité de propulsion (170) étant conçue pour appliquer des forces qui se situent dans une plage comprise entre 1 N et $10^{-6}$ N afin de maintenir le véhicule d'exploration (100) en lévitation au-dessus de la surface pendant une période comprise entre 1 minute et 1 heure.

**2.** Véhicule d'exploration selon la revendication 1, dans lequel l'unité de propulsion (170) est en outre conçue pour fonctionner dans le vide.

**3.** Véhicule d'exploration selon la revendication 1 ou 2, dans lequel la trajectoire mise à jour est un tracé polygonal, et le véhicule d'exploration (100) est conçu pour effectuer une rotation dans un plan horizontal du véhicule d'exploration (100) en un point du tracé polygonal pour s'orienter selon le segment polygonal qui suit le point et pour se déplacer le long du segment polygonal qui suit le point après la rotation.

**4.** Véhicule d'exploration selon l'une des revendications 1 à 3, dans lequel l'unité de propulsion (170) est en outre conçue pour régler une vitesse du véhicule d'exploration (100) par rapport au petit corps (A) ou à la lune afin de déplacer le véhicule d'exploration (100) le long de la trajectoire mise à jour, une pression solaire d'un soleil étant prise en compte lors du réglage de la vitesse.

**5.** Véhicule d'exploration selon l'une des revendications 1 à 4, dans lequel l'unité de détection (140) est en outre conçue pour détecter une distance relative d'une position actuelle du véhicule d'exploration (100) par rapport à la surface du petit corps (A) ou de la lune et la fournir à l'unité de traitement (150), qui elle-même est conçue pour fournir à l'unité de commande (160) une vitesse de consigne correspondant à la distance relative, dans lequel l'unité de commande (160) est conçue pour coopérer avec l'unité de propulsion (170) pour déplacer le véhicule d'exploration (100) selon la trajectoire mise à jour.

**6.** Véhicule d'exploration selon l'une des revendications 1 à 5, comprenant en outre un capteur d'accélération qui est conçu pour mesurer une accélération du véhicule d'exploration (100), dans lequel l'unité de traitement (150) est conçue pour fournir à l'unité de commande (160), sur la base de l'accélération mesurée, une vitesse nécessaire pour suivre la trajectoire mise à jour.

**7.** Véhicule d'exploration selon l'une des revendications 1 à 6, dans lequel l'unité de traitement (150) est en outre conçue, sur la base de la norme du vecteur de force gravitationnelle, pour tenir compte, lors de la mise à jour de la trajectoire, d'une vitesse minimale du véhicule d'exploration par rapport au petit corps (A) ou à la lune en dessous de laquelle il ne faut pas descendre.

**8.** Véhicule d'exploration selon l'une des revendications 1 à 7, dans lequel l'unité de traitement (150) est conçue pour tenir compte, lors de la mise à jour de la trajectoire, du fait que le long de la trajectoire, seuls des couples inférieurs à $10^{-2}$ Nm apparaissent dans une direction se rapprochant ou s'éloignant d'un centre de gravité du petit corps (A) ou de la lune.

**9.** Véhicule d'exploration selon l'une des revendications 1 à 8, dans lequel le véhicule d'exploration (100) comprend un système d'alimentation en énergie (110), et dans lequel le système d'alimentation en énergie (110) comprend un dispositif de stockage d'énergie (222) et un dispositif d'alimentation en énergie (212), dans lequel le système d'alimentation en énergie (110) est conçu pour alimenter l'unité de propulsion (170) en énergie.

10. Véhicule d'exploration selon la revendication 9, dans lequel le dispositif d'alimentation en énergie (212) est conçu pour alimenter le dispositif de stockage d'énergie (222) et l'unité de propulsion (170) en énergie lorsque le rayonnement solaire d'un soleil est présent.

11. Véhicule d'exploration selon la revendication 9 ou 10, dans lequel le dispositif de stockage d'énergie (222) est conçu pour alimenter l'unité de propulsion (170) en énergie si aucun rayonnement solaire d'un soleil n'est présent.

12. Véhicule d'exploration selon l'une des revendications 9 à 11, dans lequel le dispositif de stockage d'énergie (222) est conçu, conjointement avec le dispositif d'alimentation en énergie (212), pour alimenter l'unité de propulsion (170) en énergie si une tension d'alimentation fournie par le dispositif d'alimentation en énergie (212) devient inférieure à une valeur seuil, la valeur seuil caractérisant une tension d'alimentation minimale de l'unité de propulsion (170).

13. Véhicule d'exploration selon l'une des revendications 9 à 12, dans lequel l'unité de traitement (150) est conçue pour tenir compte, lors de la mise à jour de la trajectoire, du fait qu'une position d'atterrissage du véhicule d'exploration (100) à la fin de la trajectoire mise à jour ou qu'une position d'atterrissage du véhicule d'exploration (100) au-dessous de la trajectoire mise à jour sur une surface du petit corps (A) ou de la lune se trouve en vue directe avec un soleil, afin d'alimenter le dispositif d'alimentation en énergie (212) en énergie par le rayonnement du soleil.

14. Véhicule d'exploration selon l'une des revendications 9 à 13, dans lequel le dispositif d'alimentation en énergie (212) est conçu pour alimenter le dispositif de stockage d'énergie (222) en énergie et/ou le dispositif de stockage d'énergie (222) est conçu pour être alimenté en énergie par le dispositif d'alimentation en énergie (212).

15. Véhicule d'exploration selon l'une des revendications 9 à 14, dans lequel le système d'alimentation en énergie (110) ne présente que des liaisons électriques unidirectionnelles.

FIG 1

FIG 2

FIG 3

S1

S2    α

S3  →

S4    α

S5  ↓

$\vec{g}$

$\vec{g}$

5 to 10 m

erreichbarer Abstand 70-100 m

FIG 4

S6

S9

S7

TAG

S8

NACHT

M

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080023587 A1